# EUROPEAN PATENT APPLICATION

(11) **EP 4 721 876 A1**
(43) Date of publication of application: **08.04.2026**
(21) Application number: 25752517.0
(22) Date of filing: 03.02.2025
(51) Int. Cl.: B05C 5/02, G01B 11/27, G01B 11/14, G01B 5/14, G01B 3/26, H01M 4/04

(54) **APPARATUS FOR ADJUSTING POSITION OF SHIM FOR SLOT DIE COATER, AND METHOD FOR ADJUSTING POSITION OF SHIM BY USING SAME**

(30) Priority: 08.02.2024 KR 20240019591
(71) Applicant: LG Energy Solution, Ltd., Seoul 07335 (KR)
(72) Inventor: CHOI, Min Hyuck, Daejeon 34122 (KR); KIM, Min Cheol, Daejeon 34122 (KR); PARK, Min Gu, Daejeon 34122 (KR); PARK, Joon Sun, Daejeon 34122 (KR); LEE, Taek Soo, Daejeon 34122 (KR)
(74) Representative: Plasseraud IP
(86) International application number: PCT/KR2025/099209
(87) International publication number: WO 2025/170409

(57) **Abstract**

A device may adjust a position of a shim plate mounted in a slot die coater for electrode manufacturing. The device may have a shim adjustment part including a displacement meter for measuring an offset value of a shim plate disposed in the die block and including a position adjuster for adjusting the position of the shim plate according to the measured offset value, so that the position of the shim plate can be precisely and easily adjusted to a micrometer level during the assembly of the slot die coater, thereby enabling excellent workability and productivity. Furthermore, the slot die coater with the adjusted position of the shim plate may be used in manufacturing electrodes for lithium secondary batteries with high reliability on the loading amount of the electrode slurry because the offset of the shim plate is precisely adjustable.

## Description

### [Technical Field]

The present disclosure relates to a device for adjusting the position of a shim plate mounted in a slot die coater used for manufacturing electrodes for lithium secondary batteries, and a method for adjusting the position of the shim plate using the device.
This application claims the benefit of Korean Patent Application No.10-2024-0019591, filed on Feb. 8, 2024, the disclosure of which is incorporated herein by reference.

### [Background]

In recent years, lithium secondary batteries have been widely applied not only in small devices such as portable electronic devices, but also in medium and large devices such as battery packs or power storage devices in hybrid and electric vehicles. In particular, with the growing concern for environmental issues in recent years, there has been a lot of research on electric vehicles and hybrid electric vehicles that can replace vehicles that use fossil fuels, such as gasoline and diesel vehicles, which are major sources of air pollution.

Generally, a lithium secondary battery has a structure in which an electrode assembly including a positive electrode, a negative electrode, and a separator is impregnated in lithium electrolyte. The electrodes are formed by coating an electrode slurry including an electrode active material on an electrode current collector, and a coating device such as a slot die coater is used to coat the electrode slurry.

A slot die coater includes an upper die block and a lower die block forming a chamber for supplying the active material slurry and setting the height of a slot for discharging the active material slurry, and a shim member disposed between them to set the width of the slot. Here, the position of the end of the shim member on the same plane relative to the front outer side of the upper die block and the lower die block where the slot is located is called the offset of the shim member. The offset of the shim member is an important parameter of the coating process, as its size can change the loading amount of the electrode slurry during electrode slurry coating.

Accordingly, during assembly of a slot die coater, the position of the shim member is adjusted to precisely control the offset of the shim member disposed between the upper die block and the lower die block to a desired value. However, the position of the shim member is adjusted by manual operation of the operator, and the offset of the shim member is controlled at the micrometer (µm) level, which has the limitation that it is difficult to control precisely. In addition, in order for the operator to precisely control the position of the shim member, it is necessary to repeatedly perform procedures such as measuring the offset of the shim member through an electron microscope, moving the position of the shim member, and verifying the position of the moved shim member again, which is cumbersome and requires a considerable amount of time.

### [Prior Art Reference]

Korea Public Patent Gazette No. 10-2023-0078497

### [Summary]

### [Technical Problem]

Accordingly, it is an object of the present disclosure to provide a shim member position adjusting device capable of precisely and easily adjusting the position of a shim member during assembly of a slot die coater used for manufacturing electrodes for lithium secondary batteries, and a method for adjusting the position of the shim member using the device.

### [Technical Solution]

To resolve the issues described above,
the present disclosure provides,
a device for adjusting the position of a shim plate that is disposed between an upper die block and a lower die block of a slot die coater to form a slot, including:
   a support member;
   an attachment part supported on one side of the support member and attached to a lower die block; and
   a shim adjusting part positioned on the other side of the support member to which the attachment part is provided to adjust the position of the shim plate,
   wherein the shim adjusting part includes:
      a displacement meter to measure the offset of the shim plate from the front outer side of the lower die block where the slot is located; and
      a position adjuster for adjusting the position of the shim plate by performing a linear reciprocating motion in the longitudinal direction of the shim plate according to an offset value measured by the displacement meter.

Here, the displacement meter and the position adjuster may be disposed side by side along the width direction to be parallel to the longitudinal direction of the shim plate.

The shim adjusting part may include: a fixing member including a fixing frame including a through-hole into which the displacement meter and the position adjuster are inserted, respectively, and an incised groove located at the upper part the through-hole, and a fixing screw engaged in the incised groove and fixing the displacement meter and position adjuster inserted into the through-hole; and a moving mechanism located between the support member and the fixing member and induces a linear reciprocating movement of the fixing member in at least one of a width direction or a height direction of the lower die block.

The moving mechanism may be a two-axis stage; or may be two single-axis stages assembled to move reciprocally in straight lines in mutually perpendicular directions.

The position adjuster is a device capable of adjusting the position at the micrometer level, including: a sleeve provided with a main scale in the circumferential direction; a thimble that rotates on the sleeve and is provided with an auxiliary scale in the rotational direction; a spindle inserted inside the sleeve to perform reciprocating linear motion; and a ratchet stop inserted into the distal end of the thimble and instantiates linear motion of the spindle through rotational motion and keeps the pressure applied to the end part of the shim plate constant.

In addition, the position adjuster may include a pressing member at the spindle distal end that exerts a force on the shim plate end part, wherein the pressing member may have an oblong shape with a long axis and a short axis at a side abutting the end part of the shim plate.

The position adjuster may be equipped with a magnetic member at the distal end of the spindle that comes into contact with the shim plate.

The displacement meter may include a dial gauge, an eddy current displacement sensor, an optical displacement sensor, a linear proximity sensor, or a magnetoresistive displacement sensor.

The attachment part may be equipped with a magnetic member having a structure corresponding to the front outer side of the lower die block.

Furthermore, the present disclosure provides,
a method of adjusting the position of a shim plate for a slot die coater using the above-described device for adjusting the position of a shim plate, including:
a step (S1) of attaching the device for adjusting the position of the shim plate to the front outer side of the lower die block where the shim plate is disposed;
a step (S2) of positioning the end part of the displacement meter of the attached device for adjusting the position of the shim plate opposite to the end part of the shim plate ;
a step (S3) of measuring the offset of the shim plate relative to the outer end part of the lower die block using the repositioned displacement meter;
a step (S4) of adjusting the position of the shim plate along the longitudinal direction of the shim plate according to the measured offset value using the position adjuster; and
a step (S5) of assembling a slot die coater by disposing and fixing an upper die block on the repositioned shim plate.

Here, in the repositioned shim plate, the end part of the shim plate may be aligned so that it is on the same line with the outer end part of the lower die block, or the shim plate end part may be adjusted to be positioned on an inner side of the lower die block.

The method of adjusting the position of a shim plate may further include a step (S0) of disposing the shim plate so that an end part of the shim plate protrudes outwardly of the lower slot die prior to the step (S1) of attaching the device for adjusting the position of the shim plate, when the end part of the shim plate is aligned to be on the same line with an outward end part of the lower die block.

The step (S2) of positioning the end part of the displacement meter of the device for adjusting the position of the shim so that it is opposite to the end part of the shim plate may include: a step (S2-1) of moving the displacement meter in at least one along a width direction or a height direction of the lower die block, such that the end part of the shim plate is opposite the end part of the displacement meter; and a step (S2-2) of fixing the position of a displacement meter that has been moved.

The step (S4) of adjusting the position of the shim plate may be performed by contacting an end part of the position adjuster with an end part of the shim plate, and then applying a force to the end part of the shim plate with the position adjuster along a longitudinal direction of the shim plate.

The step (S4) of adjusting the position of the shim plate may bring the end part of the position adjuster into contact with the end part of the shim plate so that the boundary between the shim plate and the lower die block is located at the center of the end part of the position adjuster, when aligning the end part of the shim plate so that it is on the same line as the outer end part of the lower die block.

Meanwhile, the position adjuster may be equipped with a magnetic member at an end part in contact with the end part of the shim plate, in which case the shim plate may comprise a metallic material including at least one of iron, cobalt, or nickel.

### [Advantageous Effects]

The shim plate position adjustment device of a slot die coater according to the present disclosure has a shim adjustment part including a displacement meter for measuring the offset of a shim plate disposed in a die block and a position adjuster for adjusting the position of the shim plate according to the measured offset value, so that the position of the shim plate can be precisely and easily adjusted to a micrometer level during the assembly process of the slot die coater, and thus has the feature of excellent workability and productivity.

Furthermore, the slot die coater with the adjusted position of the shim plate according to the present disclosure has the advantage of manufacturing electrodes for lithium secondary batteries with high reliability on the loading amount of the electrode slurry, etc. because the offset of the shim plate is precisely adjustable.

### [Brief Description of the Drawings]

FIG. 1 is a perspective view of the structure of a typical slot die coater for electrode manufacturing.
FIG. 2 illustrates the structure of a typical slot die coater for electrode manufacturing, with (a) being the side cross-sectional view and (b) being the front view.
FIG. 3 is a side sectional view schematically illustrating the structure of a slot die coater mounted with a shim plate position adjusting device according to the present disclosure.
FIG. 4 is a perspective view of a shim plate position adjusting device according to the present disclosure.
FIG. 5 is a top view illustrating a shim plate position adjusting device according to the present disclosure, wherein (a) is a view before the first axis stage is operated, and (b) is a view after the first axis stage is operated in the width direction (y-axis direction) of the lower die block.
FIG. 6 is a side view illustrating a shim plate position adjusting device according to the present disclosure, wherein (a) is a view before the first axis stage is operated, and (b) is a view after the first axis stage is operated in the height direction (z-axis direction) of the lower die block.
FIG. 7 is a perspective view illustrating a position adjuster used in the present disclosure.
FIG. 8 is a cross-sectional view illustrating the position on the lower die block of a shim plate repositioned according to the present disclosure.
FIG. 9 is an image schematically illustrating the direction of force applied to the end part of a shim plate when the shim plate is positioned with a position adjuster according to the present disclosure, wherein (a) is an example of force applied to the inward side of the lower die block, and (b) is an example of force applied to the outward side of the lower die block.
FIG. 10 is an image illustrating the position of the position adjuster in the height direction (z-axis) of the lower die block by shim plate end part position, when aligned so that the outer end part of the lower die block and the end part of the shim plate are on the same line, according to the present disclosure.

### [Best Mode for Carrying out the Invention]

The present disclosure is subject to various modifications and can have many aspects, certain aspects will be described in detail in the following description.

However, this is not intended to limit the present disclosure to any particular aspect, and is to be understood to include all modifications, equivalents, or substitutions that fall within the scope of the thought and technical of the present disclosure.

In the present disclosure, the terms "comprising" or "having" and the like are intended to designate the presence of the features, numbers, steps, actions, components, parts, or combinations thereof described in the specification, and are not to be understood as precluding the possibility of the presence or addition of one or more other features, numbers, steps, actions, components, parts, or combinations thereof.

The present disclosure will be described in more detail below.

### Shim plate position adjusting device

In one aspect, present disclosure provides,
A device for adjusting the position of a shim plate that is disposed between an upper die block and a lower die block of a slot die coater to form a slot, including:
a support member;
an attachment part supported on one side of the support member and attached to a lower die block; and
a shim adjusting part positioned on the other side of the support member to which the attachment part is provided to adjust the position of the shim plate,
wherein the shim adjusting part includes:
   a displacement meter to measure the offset of the shim plate from the front outer side of the lower die block where the slot is located; and
   a position adjuster for adjusting the position of the shim plate by performing a linear reciprocating motion in the longitudinal direction of the shim plate according to an offset value measured by the displacement meter.

A shim plate position adjusting device according to the present disclosure (hereinafter referred to as " position adjusting device") refers to a device for adjusting the position of a shim plate during the assembly process of a slot die coater applied in the manufacture of electrodes for a lithium secondary battery.

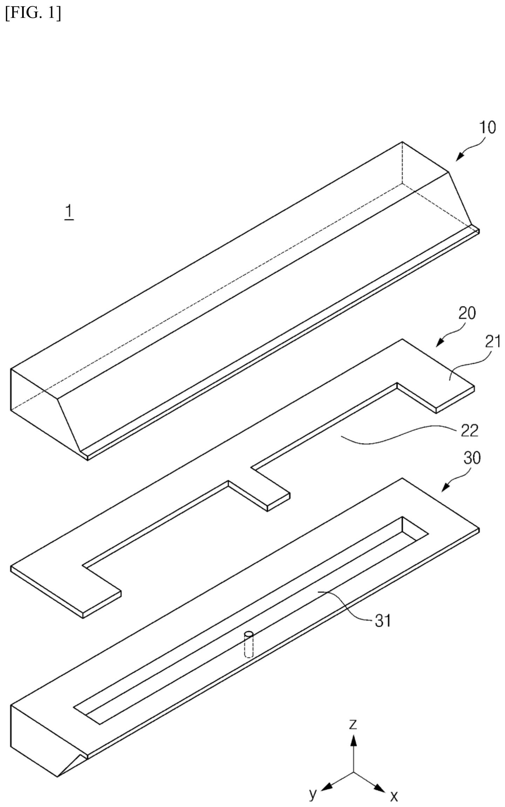

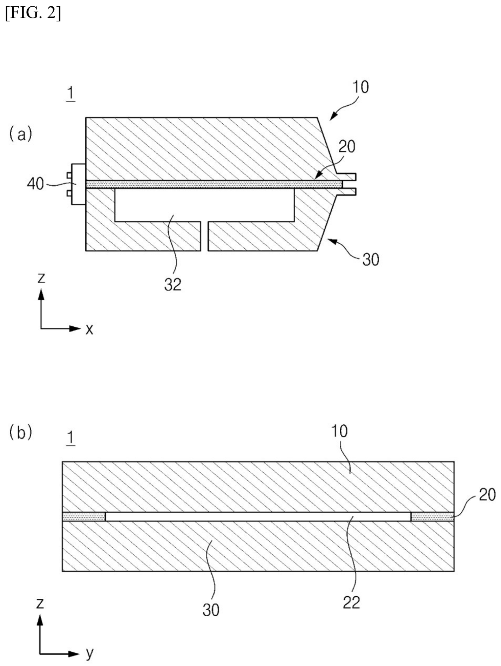

FIGS. 1 to 3 are a perspective view, a side sectional view, and a front view, respectively, of a slot die coater 1 applied in the manufacture of electrodes for a lithium secondary battery. Referring to FIGS. 1 to 3, the slot die coater 1 includes: an upper die block 10; a lower die block 30 opposite to the upper die block and having a chamber 31 for receiving an electrode slurry; a plate-shaped shim plate 20 positioned between the upper die block and lower die block, having a hollow in its body 21 communicating with the chamber 31, and having a slot 22 provided for discharging electrode slurry from the hollow; and a fixing device 40 for fixing the assembled upper die block 10, shim plate 20, and lower die block 30.

In this case, the terms "upper die block" and "lower die block" refer to relative positional relationships in the plurality of die blocks. For example, if the slot die coater is a dual slot die coater having a first die block, a first shim plate, a second die block, a second shim plate, and a third die block disposed sequentially, the first die block may be a lower die block with respect to the second die block, and conversely, the second die block may be an upper die block with respect to the first die block. Also, in this case, the second die block can be a lower die block with respect to the third die block, and the third die block can be an upper die block with respect to the second die block.

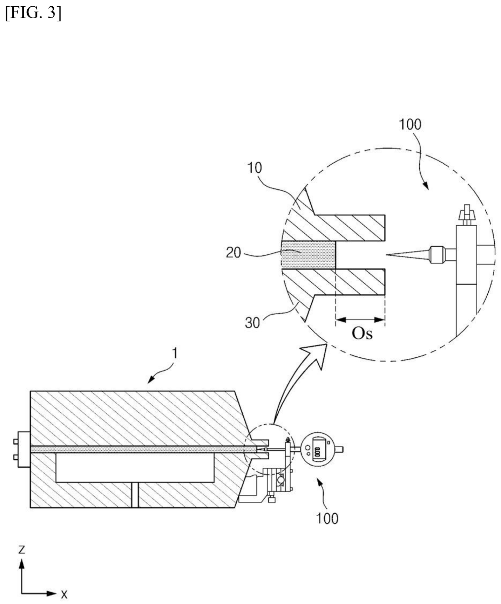

In the slot die coater 1, a shim plate 20 is disposed between the upper die block 10 and the lower die block 30 to provide a slot 22 through which the electrode slurry is discharged. Here, the position of the end part of the shim plate 20 on the same plane relative to the front surface of the upper die block 10 and the lower die block 30 where the slot is located, as shown in FIG. 3, and more specifically, the distance between the outer end part of the slot die coater in which the slot is provided and the end part of the shim plate 20 is referred to as the offset Os of the shim plate. The offset Os of the shim plate 20 is an important parameter of the coating process, as its size can change the loading amount of the electrode slurry during the coating of the electrode slurry, etc. Therefore, it is of considerable importance to precisely control the offset Os of the shim plate at the micrometer (µm) level during the assembly of the slot die coater 1. However, conventional slot die coater assembly is performed by manual labor of the operator, which not only makes it difficult to achieve precise adjustment, but also requires several times of assembly and disassembly of the slot die coater to achieve precise offset adjustment, resulting in significantly lower workability and productivity.

However, the position adjusting device 100 according to the present disclosure can overcome this problem by measuring the offset of the shim plate 20 disposed on the die block during assembly of the slot die coater 1, and moving the shim plate 20 so that the measured offset value satisfies the predetermined position and/or offset.

For this purpose, the position adjusting device 100 may be used during the assembly process of the slot die coater 1 with the shim plate 20 disposed on the lower die block 30 or the shim plate 20 disposed between the upper die block 10 and the lower die block 30, and with the shim plate 20 is not fixed.

Further, the position adjusting device 100 includes means for measuring the offset of the shim plate 20 disposed on the lower die block and for moving the shim plate 20 to satisfy a predetermined position and/or offset.

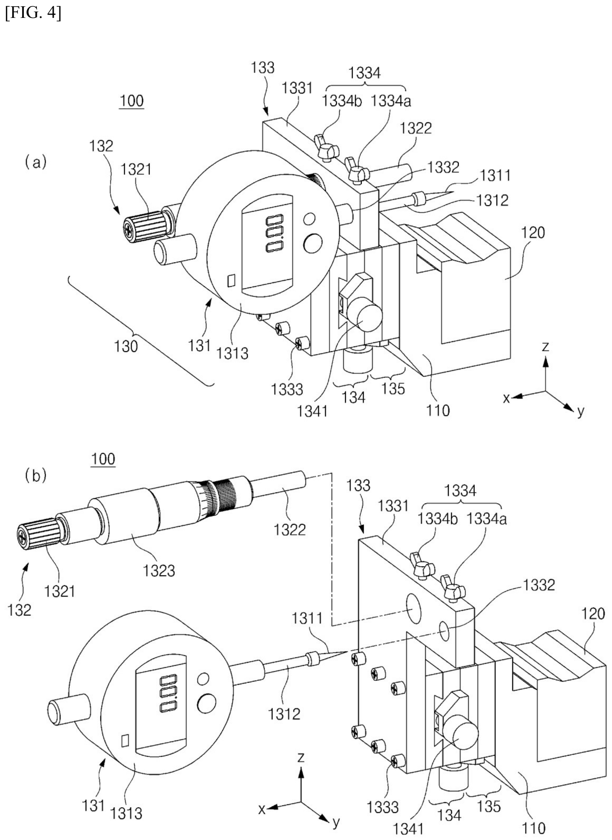

Specifically, referring to FIG. 4, the position adjusting device 100 includes a support member 110 that forms the basic skeleton of the device and supports each of its components, an attachment part 120 supported on one side of the support member 110 to attach to a die block on which a shim plate is disposed, and a shim adjustment part 130 located on the other side of the support member 110 to adjust the position of the shim plate.

Here, the support member 110 may be applied without particular limitation as long as it is material and structure capable of supporting the attachment part 120 and the shim adjustment part 130, without limitation. For example, the support member 110 may be stainless steel in a "L" shape with the attachment part 120 seated on the inner side and the shim adjustment part 130 supported on the outer side.

Additionally, the attachment part 120 may be attached to the lower die block on which the shim plate is disposed, but may be located on the front outer side of the lower die block where a slot is provided by the shim plate to measure the offset of the shim plate.

The attachment part 120 may be applied without particular limitation as long as it is material and shape that can be attached to the lower die block. Specifically, the attachment part 120 may be equipped with a magnetic member having a structure that corresponds to the area of the die block to which the attachment part is attached, more specifically to the front outer side of the lower die block. In this case, the attachment part 120 may allow the position adjusting device 100 to be firmly fixed to the surface of the lower die block without wobbling, thus allowing for more precise offset measurement and movement of the shim plate. Furthermore, by making the structure of the surface on which the attachment part 120 is attached to the lower die block correspond to the structure of the front outer surface of the lower die block on which the shim plate is disposed, it is advantageous to facilitate position adjustment of the shim adjustment part 130 connected via the support member 110.

For example, if the lower die block has the appearance of a rectangular parallelepiped block, the attachment part may be equipped with a magnetic member having a rectangular parallelepiped or cubic shape.

Further, if the lower die block has a tapered shape in which the upper surface (or inner surface) has a longer length than the lower surface (or outer lower surface), the attachment part may have a rectangular parallelepiped or cubic structure, but the magnetic member may have a structure such that the attachment surface abutting the lower die block is inclined such that the inclination of the attachment surface abutting the lower die block sums to 180° with the inclination of the front outer surface of the lower die block at the time of attachment.

The shim adjustment part 130 includes a displacement meter 131 that measures the offset of the shim plate, and a position adjuster 132 that moves the shim plate according to the offset value measured by the displacement meter.

In this case, the displacement meter 131 and the position adjuster 132 may be positioned parallel to the longitudinal direction (x-axis direction) of the shim plate on which the shim plate is disposed, but are disposed side by side along the width direction (y-axis direction) of the lower die block to be opposite to the shim plate end part for offset measurement and movement of the shim plate, respectively.

The displacement meter 131 and the position adjuster 132 are positioned parallel to the length direction (x-axis direction) of the shim plate to enable precise control during offset measurement and movement. Furthermore, the displacement meter 131 and the position adjuster 132 are disposed side by side along the width direction (y-axis direction) of the die block to be opposite to the end part of the shim plate, which has the advantage of enabling immediate movement of the shim plate without changing the offset after measuring the offset of the shim plate.

The displacement meter 131 and the position adjuster 132 may be fixed together to precisely perform the offset measurement of the shim plate and the movement of the shim plate accordingly. Specifically, the shim adjustment part 130 may include a fixing member 133 for fixing the displacement meter 131 and the position adjuster 132 together, which includes a fixing frame 1331 including a through-hole 1332 into which the displacement meter 131 and the position adjuster 132 are inserted side by side, respectively, and an incised groove (not shown) located on the upper part of the through-hole; and a fixing screw 1334 engaged in the incised groove and fixing the displacement meter 131 and the position adjuster 132 inserted into the through-hole.

The fixing member 133 serves to fix the displacement meter 131 and the position adjuster 132 together side by side in parallel to each other. At this time, the fixing member 133 can be fixed such that each distal end of the displacement meter 131 and the position adjuster 132 has the same separation distance from the end part of the shim plate along the width direction (y-axis direction) of the lower die block. In other words, the fixing member 133 can fix such that the distal end position of the displacement meter 131 and the distal end position of the position adjuster 132 are side by side.

Furthermore, the shim adjustment part 130 may include a moving mechanism positioned between the fixing member 133 and the support member 110 to induce a linear reciprocating movement of the fixing member 133 in at least one along a width direction (y-axis direction) or a height direction (z-axis direction) of the lower die block.

Specifically, the moving mechanism may be a two-axis stage; or two single-axis stages assembled to reciprocate in a straight line in a direction perpendicular to each other.

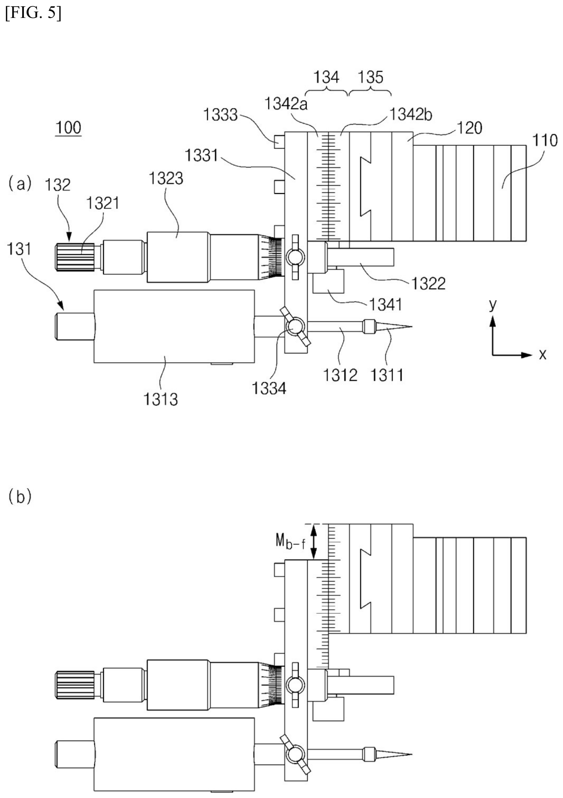

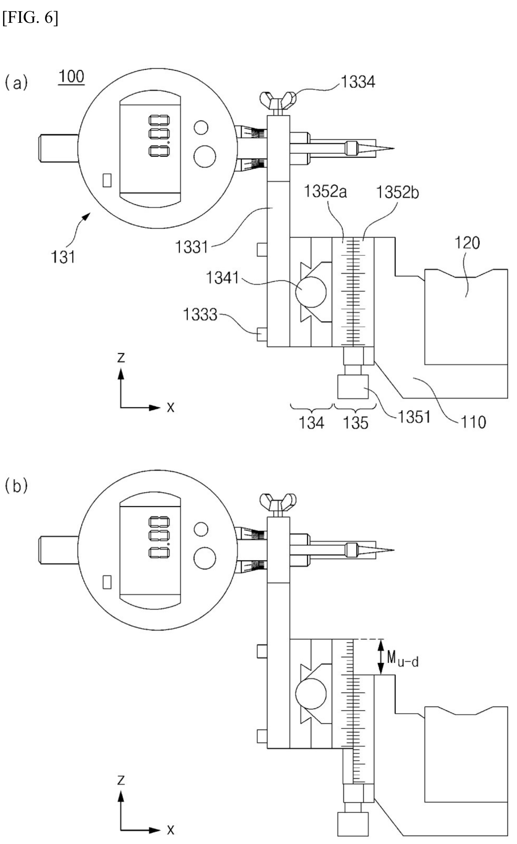

In one example, the moving mechanism may include a single-axis stage 134 movable in the width direction (y-axis direction) of the lower die block, as shown in FIG. 5, and a single-axis stage 135 movable in the height direction (z-axis direction) of the lower die block, as shown in FIG. 6. The two single-axis stages may individually perform linear reciprocating movements, M_{b-f} and M_{u-d}, in a direction perpendicular to each other.

The stages may be linear moving mechanisms capable of moving small distances, such as millimeter (mm) distances or micrometer (µm) distances.

Each of the single-axis stages 134 and 135 has a structure in which two upper stages 1342a and 1352a and lower stages 1342b and 1352b are coupled, wherein the upper stages 1342a and 1352a are connected to cylinder members 1341 and 1351 on one side so that the lower stages 1342b and 1352b are moved by a predetermined stroke caused by the movement of the cylinder member. The cylinder member 1341 and 1351 is connected to a driving part (not shown), and is movable according to the operation of the driving part. Furthermore, the cylinder member 1341 and 1351 may be equipped with a mechanical conversion mechanism (not shown) that converts the rotational motion into linear motion, for example by a ball screw-ball nut engagement. Thus, the rotational motion of the driving part may be transmitted and converted into linear motion of the cylinder member 1341 and 1351. Furthermore, other conversion mechanisms may also be employed in the single-axis stages 134 and 135, which will not be described in detail. The single-axis stages 134 and 135 are configured to precisely control the forward and backward movement of the cylinder member 1341 and 1351 when a certain angle of rotational motion is transmitted by the driving part. Thus, it is possible to move the cylinder member 1341 and 1351 by very small amounts of strokes (e.g., in units of several millimeters) that would otherwise be difficult for an operator to control.

The moving mechanism is directly supported on the support member 110 and has a configuration that moves the fixing member 133 itself, on which the displacement meter 131 and the position adjuster 132 are fixed side by side, but is movable in two orthogonal axial directions as described above, so that the displacement meter 131 and the position adjuster 132 can be easily repositioned so that their end parts are opposite to the end part of the shim plate while keeping the displacement meter 131 and the position adjuster 132 parallel to the longitudinal direction (x-axis direction) of the shim plate. Furthermore, the moving mechanism has the advantage of being adjustable over a small distance, so that precise zeroing of the displacement meter can be performed prior to measuring the offset of the shim plate.

Meanwhile, the displacement meter 131 may be applied, without being particularly limited, as long as it is capable of measuring the offset of the shim plate. Specifically, the displacement meter 131 may be a dial gauge, an eddy current displacement sensor, an optical displacement sensor, a linear proximity sensor, or a magnetoresistive displacement sensor. As one example of an optical displacement sensor, a laser displacement sensor may be used. A laser displacement sensor is provided with a light transmitter that illuminates a laser and a light receiver that collects the reflected light. By irradiating the laser onto the surface of the coating roll by the light transmitter, collecting the reflected light, and measuring the angle of the reflected light with a camera, the distance (displacement) from the displacement sensor to the surface of the coating roll can be measured without contact.

In one example, the displacement meter 131 may be a dial gauge. The dial gauge may be easily adjustable in position with the position adjuster in application, allowing for a more precise movement of the shim plate according to the measured offset value.

Furthermore, the position adjuster 132 may have a structure that is capable of moving the end part of the shim plate in the longitudinal direction (x-axis direction) of the shim plate by micrometers (µm) level.

In one example, the position adjuster 132 may include a sleeve 1324 having a circumferentially disposed main scale, a thimble 1323 rotating on the sleeve and having an auxiliary scale in a rotational direction, a spindle 1322 inserted inside the sleeve to perform reciprocating linear motion, and a ratchet stop 1321 inserted at a distal end of the thimble to instantiate linear motion of the spindle through rotational motion and to maintain a constant pressure applied to the end part of the shim plate.

Here, the sleeve 1324 may have a female screw structure on the inner side. Accordingly, the sleeve 1324 may be fastened to one side of the spindle 1322 having a small male screw structure with a high-precision pitch. Further, the other outer side of the spindle 1322 to which the sleeve is fastened may be equipped with a thimble 1323, such that the thimble 1323 is superimposed on the outer distal end of the sleeve 1324. The spindle 1322 may perform linear motion in the axial direction by rotation of the thimble 1323.

Furthermore, the sleeve 1324 may have a circumferentially disposed main scale in units of millimeters (mm) and the thimble 1323 may have a circumferentially disposed auxiliary scale in units of micrometers (µm). Thus, the position adjuster may be adjustable for a linear motion distance in units of micrometers.

Furthermore, the spindle 1322 may be fixed by a clamp (not shown) fastened through a through-hole penetrating the outer surface of the sleeve by pressing against the surface.

Further, the spindle 1322 may be coupled with a ratchet stop 1321 protruding outwardly from the end part of the thimble 1323. The position adjuster 132 can move the shim plate by pressing on the end part of the shim plate using the spindle 1322. However, due to the structure of the lower die block, the movement of the shim plate may be stopped. In this case, a momentarily high pressure may be applied to the shim plate that has stopped moving, and the ratchet stop 1321 functions to prevent a significant increase in the pressure applied to the end part of the shim plate by idling when a force greater than a predetermined pressure is applied to the spindle.

Moreover, the spindle 1322 may be provided with a pressing member 1325 at its distal end to apply a force in contact with the end part of the shim plate during shim plate positioning, in order to increase the efficiency of the force applied to the end part of the shim plate.

The pressing member 1325 is not particularly limited as long as it is capable of pressurizing the end part of the shim plate, but may be made of a material having an equivalent or similar hardness to the shim plate to ensure that sufficient pressure is applied to the end part of the shim plate when pressurized.

Further, the pressing member 1325 may satisfy predetermined conditions in terms of the shape of the face in contact with the end part of the shim plate so that pressure can be effectively applied to the end part of the shim plate. Specifically, the pressing member 1325 may have an oblong shape such that the face in contact with the end part of the shim plate has a long axis and a short axis that is relatively shorter than the long axis, and may be mounted on the spindle 1322 such that the long axis of the oblong shape is aligned with the width direction of the shim plate.

In this case, the pressing member 1325 may have an oval, rectangular, or combination thereof shape on the face in contact with the end part of the shim plate.

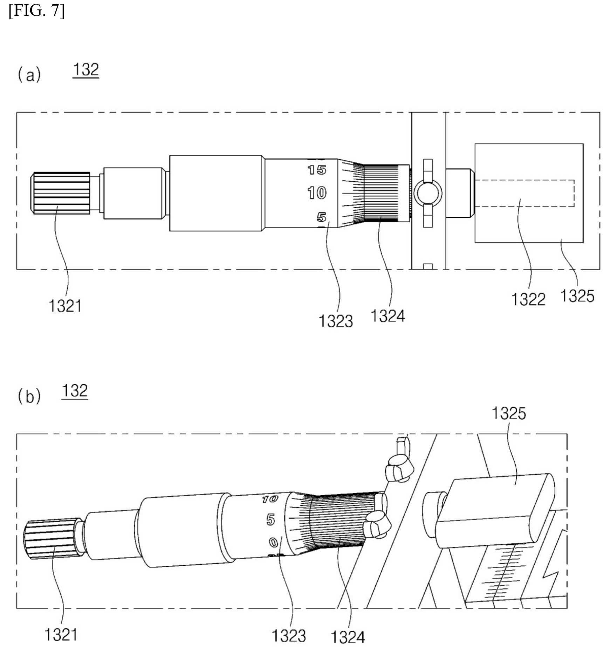

In one example, the pressing member 1325 may have an oblong shape with a combination of a rectangle and semicircular short sides, as shown in FIG. 7. In this case, the pressing member 1325 may be disposed such that its long axis is parallel to the end part of the shim plate during movement of the shim plate, thereby increasing the contact area with the end part of the shim plate so that the force of the pressing member may be applied to the end part of the shim plate more efficiently.

By adjusting the shape of the side where the pressing member 1325 contacts the end part of the shim plate as described above, the present disclosure can more easily move the shim plate with less force applied to the end part of the shim plate.

Furthermore, the spindle 1322 may be provided with a magnetic member (not shown) at a distal end abutting the shim plate. The magnetic member may be, but is not limited to, a permanent magnet, as long as it is a magnetic material. Further, the magnetic member may be provided at the end part of the spindle 1322, and if the spindle 1322 is provided with a pressing member 1325 at the end part, the pressing member 1325 may be mounted on the end part of the spindle 1322 or the pressing member 1325 itself may be a permanent magnet to function as a magnetic member.

The position adjusting device according to the present disclosure has the above-described configuration, which enables the position of the shim plate to be adjusted precisely and easily to the micrometer level during the assembly process of the slot die coater, and is therefore characterized by excellent workability and productivity.

### Shim plate position adjusting method

Furthermore, in one aspect, the present disclosure provides,
a method of adjusting the position of a shim plate for a slot die coater using the above-described device for adjusting the position of a shim plate, including:
a step (S1) of attaching the device for adjusting the position of the shim plate to the front outer side of the lower die block where the shim plate is disposed;
a step (S2) of positioning the end part of the displacement meter of the attached device for adjusting the position of the shim plate opposite to an end part of the shim plate;
a step (S3) of measuring the offset of the shim plate relative to the outer end part of the lower die block using the repositioned displacement meter;
a step (S4) of adjusting the position of the shim plate along the longitudinal direction of the shim plate according to the measured offset value using the position adjuster; and
a step (S5) of assembling a slot die coater by disposing and fixing an upper die block on the repositioned shim plate.

A shim plate position adjusting method according to the present disclosure (hereinafter referred to as the "position adjusting method") refers to a method for adjusting the position of a shim plate disposed on a die block in the process of assembling a slot die coater using the position adjusting device of the present disclosure described above.

The position adjusting method is characterized in that the position adjusting device of the present disclosure can be used to adjust the position of the shim plate more precisely and easily in the process of assembling the slot die coater, so that the workability and productivity are excellent.

In the present disclosure, the shim plate can be positioned in two different ways. Specifically, the shim plate can be aligned so that its end part is in line with the outer corner of the lower die block, or it can be adjusted so that it is positioned on the inner side of the lower die block.

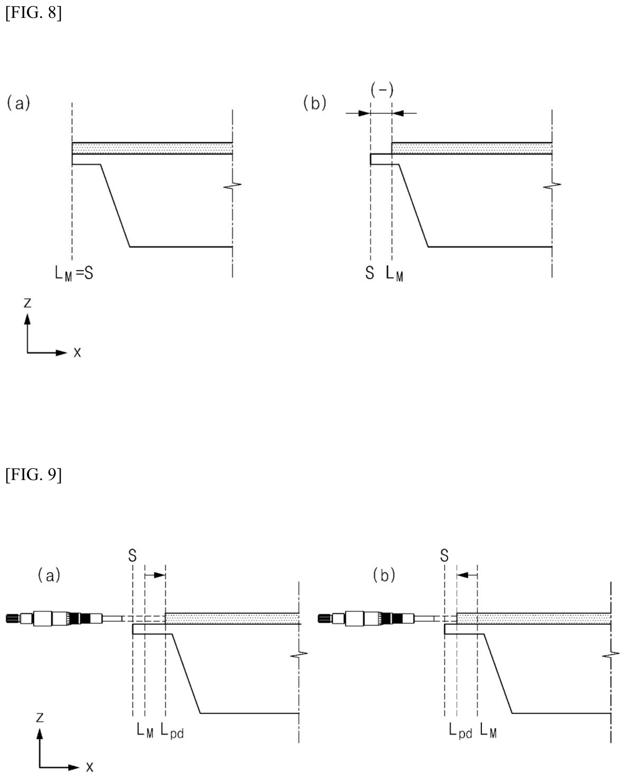

Referring to FIG. 8, a shim plate repositioned according to the present disclosure may have an front outer end part position S of the lower die block and an end part position L_{M} of the shim plate on the same line, as shown in (a), in which case the offset of the shim plate may be "0". In addition, the shim plate may have a shim plate end part position L_{M} on the inner side of the lower die block as shown in (b), such that the offset of the shim plate has a negative value relative to the front outer end part position S of the lower die block. The offset of the shim plate affects the loading amount during application of the electrode slurry and may be appropriately selected according to the specifications of the electrode to be manufactured. In order to adjust the position of the shim plate to the selected/predetermined offset (or shim plate position) according to the electrode specification, the position adjusting method of the present disclosure may satisfy the predetermined conditions in each step.

The following describes this shim plate position adjusting method of the present disclosure in more detail, step by step.

First, the position adjusting method includes a step (S1) of attaching a position adjusting device to a front outer side of the lower die block in which the shim plate is disposed.

The step (S1) refers to the process of attaching the position adjusting device to the front outer side of the lower die block in which the shim plate is disposed, so that the device is fixed to prevent it from shaking.

In this case, the "front outer side of the lower die block" refers to the outer side in which the slot is provided by the shim plate in the lower die block. Specifically, the position adjusting device may be attached to an area adjacent to the end part of the shim plate disposed in the lower die block, such as the front outer surface of the lower die block where the end part of the shim plate is located, in order to facilitate adjustment of the position of the shim plate.

Furthermore, the offset of the shim plate is measured along the longitudinal direction (x-axis direction) of the shim plate. Therefore, the displacement meter and the position adjuster of the position adjusting device attached in the step (S1) may be disposed to be spaced apart by a predetermined distance (e.g., 0.1 mm to 100 mm, 0.1 mm to 50 mm, or 0.1 mm to 20 mm) from the end part of the shim plate in the longitudinal direction (x-axis direction) of the shim plate.

Next, the positioning method includes a step (S2) of positioning the end part of the displacement meter of the attached positioning device opposite to an end part of the shim plate.

In the positioning adjustment device attached to the front outer side of the lower die block, the device itself is disposed adjacent to the end part of the shim plate, but the positions of the displacement meter and the position adjuster of the device are not fixed, so it is difficult to move the position of the shim plate with micrometer (µm) level precision. Therefore, the present step (S2) refers to a process of adjusting the position of the displacement meter and the position adjuster of the positioning device using a moving mechanism included in the positioning device and fixing the adjusted position.

Specifically, the step (S2) may include: a step (S2-1) of moving the position of an end part of the displacement meter in at least one along a width direction or a height direction of the lower die block such that the end part of the shim plate and the end part of the displacement meter are opposite; and a step (S2-2) of fixing the position of the displacement meter that has been moved.

Since the step (S2-1) of moving the position of the end part of the displacement meter was performed in the previous step (S1) for measuring the offset of the shim plate, in which the respective end part positions of the displacement meter and the position adjuster were disposed to be separated by a predetermined distance in the longitudinal direction (x-axis direction) of the shim plate relative to the front outer end part of the lower die block, in this step (S2), the positions of the end part of the displacement meter and the position adjuster can be adjusted in the width direction (y-axis direction) and the height direction (z-axis direction) of the lower die block.

More specifically, the position adjusting device can simultaneously move each end part of the displacement meter and the position adjuster in a height direction (z-axis direction) and/or a width direction (y-axis direction) of the lower die block by means of a moving mechanism provided between the fixing member and the support member that fix the displacement meter and the position adjuster.

Additionally, the step (S2-2) of fixing the position of the displacement meter that has been moved may fix the displacement meter that has been moved so that it is opposite to the end part of the shim plate, so that the zero point does not wobble when measuring the offset of the shim plate.

Furthermore, since the displacement meter and the position adjuster are fixed side by side together along a width direction (y-axis direction) of the lower die block parallel to a longitudinal direction (x-axis direction) of the shim plate by a fixing member of the position adjuster, this step (S2) may be performed in conjunction with position shifting and fixing of the displacement meter and position shifting and fixing of the position adjuster. Further, the repositioned and fixed displacement meter and the position adjuster may be spaced apart by an equal distance at each end part with respect to the front outer end part of the lower die block. That is, the end part of the displacement meter and the end part of the position adjuster may be spaced apart by an equal distance from the end part of the shim plate. Accordingly, the position adjuster can be precisely actuated in response to the offset of the shim plate measured by the displacement meter.

Next, the positioning method includes a step (S3) of measuring an offset of the shim plate.

The step (S3) may measure the offset of the shim plate before repositioning by zeroing the position of the moved and fixed displacement meter to i) first measure the distance (L₁) to the front outer end part of the lower die block, ii) subsequently measure the distance (L₂) to the end part of the shim plate, and iii) calculate the deviation (L₁₋ L₂ ) therefrom. Thus, the offset of the shim plate may be positive when the shim plate protrudes front outside of the lower die block, and negative when the end part of the shim plate is disposed inside the lower die block.

Next, the positioning method includes a step (S4) of adjusting the shim plate position according to an offset value measured using the position adjuster.

The step (S4) includes comparing the offset value of the shim plate measured in the previous step (S3) with the predetermined position and/or offset of the shim plate, and adjusting the position of the shim plate to satisfy the predetermined position and/or offset of the shim plate when a deviation exists.

Here, the predetermined offset of the shim plate may be a value that is recalculated based on the distance (L₁) from the zero point of the displacement meter to the front outer end part of the lower die block, as measured earlier, so as to have the same basis as the offset of the shim plate measured in the previous step (S3).

To this end, this step (S4) may be performed by contacting the end part of the position adjuster with the end part of the shim plate and then applying a force to the end part of the shim plate with the position adjuster along the longitudinal direction of the lower die block.

In this case, the force applied to the end part of the shim plate by the position adjuster may have a different directionality depending on the predetermined position and/or offset of the shim plate and the offset of the shim plate measured in the previous step (S3).

In one example, the force may be a force that pushes the shim plate toward the inner side of the lower die block along the longitudinal direction (x-axis direction) of the shim plate when the predetermined end part position L_{pd} of the shim plate is located on the inner side of the lower die block relative to the end part position L_{M} of the shim plate measured in the previous step (S3), as shown in (a) of FIG. 9.

As another example, the force may be a pulling force toward the outer side of the lower die block when the predetermined end part position L_{pd} of the shim plate, as shown in (b) of FIG. 9, is located on the outer side of the lower die block relative to the end part position of the shim plate L_{M} measured in the previous step (S3).

Furthermore, the position adjuster may have an operating position that varies somewhat depending on the predetermined shim plate end part position L_{pd} and/or offset; and the shim plate end part position L_{M} and/or offset measured in the previous step (S3). Accordingly, the position adjuster may be repositioned prior to contact with the end part of the shim plate.

Specifically, when a predetermined end part position L_{pd} of the shim plate is adjusted to be located inward relative to an outer end part position S of the lower die block, the position of the end part of the position adjuster in the height direction (z-axis direction) of the lower die block may be adjusted such that the end part of the position adjuster is opposite the end part of the shim plate, but the lower end of the position adjuster exists on the lower die block, as shown in FIG. 9.

However, when aligning the predetermined end part position L_{pd} of the shim plate to be on the same line as the front outer end part S of the lower die block, the position of the position adjuster end part may be adjusted along the height direction (z-axis direction) of the lower die block depending on the shim plate end part position L_{M} and/or offset value measured in the previous step (S3).

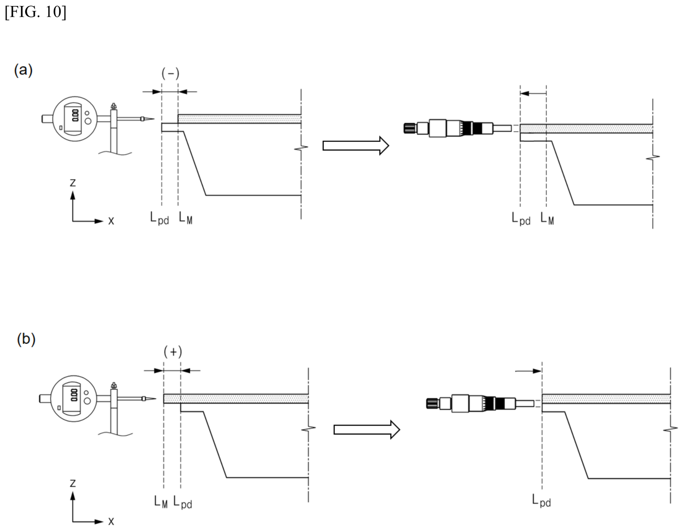

In one example, when the predetermined end part position L_{pd} of the shim plate measured in the previous step (S3) is located "inward" with respect to the front outer end part position S of the lower die block when the predetermined end part position L_{pd} of the shim plate is aligned on the same line as the front outer end part position S of the lower die block, the end part of the position adjuster may be opposed to the end part of the shim plate as shown in (a) of FIG. 10, but the position of the position adjuster in the height direction (z-axis direction) of the lower die block may be adjusted such that the lower end of the position adjuster is on the lower die block.

As another example, when the predetermined end part position L_{pd} of the shim plate measured in the previous step (S3) is located "outside" relative to the front outer end part position S of the lower die block when the predetermined end part position L_{pd} of the shim plate is aligned on the same line with the front outer end part position S of the lower die block, the position of the lower die block in the height direction (z-axis direction) can be lowered so that the boundary between the shim plate and the lower die block is centered at the end part of the position adjuster, and then the end part of the position adjuster and the end part of the shim plate can be brought into contact.

Although the shim plate end part position L_{M} can be adjusted in either of the two examples described above when it is aligned to be on the same line with the front outer end part position S of the lower die block, the latter case may be preferable in terms of ease of operation. To this end, the position adjusting method according to the present disclosure may perform a step (S0) of disposing the shim plate so that its end part protrudes outwardly of the lower die block prior to adjusting the position of the shim plate, in particular prior to the step (S1) of attaching the shim plate position adjusting device.

Meanwhile, when the force applied to the end part of the shim plate by the position adjuster in the step (S4) is a force that pulls the lower die block outwardly, in order to move the shim plate to the predetermined position, it is necessary to maintain the respective end parts of the position adjuster and the shim plate in contact when the force is applied. For this purpose, the present disclosure can be provided with a magnetic member at the end part of the position adjuster that is in contact with the end part of the shim plate, and the shim plate can be configured with a material that has ferromagnetism under magnetic field conditions in response thereto.

In one example, the position adjuster may be equipped with a permanent magnet at the end part, and the shim plate may comprise a metallic material including at least one among iron, cobalt, or nickel (e.g., iron, nickel, cobalt, iron oxide (Fe₂O₃, Fe₃O₄, etc.), ferrite, etc.). By providing a magnetic member at the end part of the position adjuster and adjusting the composition of the shim plate as described above, the present disclosure can properly instantiate the attraction between the position adjuster and the shim plate, so that the shim plate can be easily moved when a pulling force is applied to the end part of the shim plate outwardly of the lower die block.

Finally, the positioning method includes a step (S5) of assembling the slot die coater by disposing and fixing the upper die block on the repositioned shim plate.

This step (S5) refers to fixing the shim plate, which is repositioned to have a predetermined position or offset, to the lower die block, and disposing and fixing the upper die block on the shim plate to complete the assembly of the slot die coater.

The position adjusting method of the shim plate according to the present disclosure has the feature in that, the position of the shim plate can be precisely adjusted to the micrometer (µm) level during the assembly process of the slot die coater by using the shim plate position adjusting device of the present disclosure, and has excellent workability and productivity. Furthermore, the slot die coater assembled by applying the above position adjusting method has the advantage of manufacturing electrodes for lithium secondary batteries with high reliability for the loading amount of the electrode slurry, etc. because the offset of the shim plate is precisely adjusted.

While the foregoing has been described with reference to preferred aspects of the present disclosure, it will be appreciated by those skilled in the art or having ordinary knowledge of the art that various modifications and changes can be made to the present disclosure without departing from the field of thought and technology described in the patent claims that will follow.

Thus, the technical scope of the present disclosure is not limited to what is recited in the detailed description of the specification, but should be defined by the claims of the patent.

## Claims

1. A device for adjusting a position of a shim plate that is disposed between an upper die block and a lower die block of a slot die coater to form a slot, comprising:
a support member;
an attachment part supported on a first side of the support member and attached to the lower die block; and
a shim adjusting part positioned on a second side of the support member to which the attachment part is provided, wherein the shim adjusting part is configured to adjust the position of the shim plate and comprises:
a displacement meter configured to measure an offset value of the shim plate from a front outer side of the lower die block where the slot is located; and
a position adjuster configured to adjust the position of the shim plate through a linear reciprocating motion in a longitudinal direction of the shim plate based on the offset value measured by the displacement meter.

2. The device for adjusting the position of a shim plate of claim 1, wherein the displacement meter and the position adjuster are disposed side by side along a width direction of the lower die block, but each is disposed parallel to the longitudinal direction of the shim plate.

3. The device for adjusting the position of a shim plate of claim 1, wherein the shim adjusting part comprises:
a fixing member comprising:
a fixing frame including a through-hole into which the displacement meter and the position adjuster are inserted, respectively, and an incised groove located at the upper part the through-hole, and a fixing screw engaged in the incised groove and fixing the displacement meter and position adjuster inserted into the through-hole, the fixing frame comprises a through-hole into which the displacement meter and the position adjuster are inserted, respectively, and an incised groove located at the upper part the through-hole; and
a moving mechanism located between the support member and the fixing member and inducing a linear reciprocating movement of the fixing member in at least one of a width direction or a height direction of the lower die block.

4. The device for adjusting the position of a shim plate of claim 3, wherein the moving mechanism is a two-axis stage or two single-axis stages assembled to move reciprocally in straight lines in mutually perpendicular directions.

5. The device for adjusting the position of a shim plate of claim 1, wherein the position adjuster comprises:
a sleeve provided with a main scale in a circumferential direction;
a thimble configured to rotate on the sleeve and is provided with an auxiliary scale in a rotational direction;
a spindle inserted inside the sleeve and configured to perform reciprocating linear motion; and
a ratchet stop inserted into a distal end of the thimble and configured to instantiate linear motion of the spindle through rotational motion and configured to keep pressure applied to an end part of the shim plate constant.

6. The device for adjusting the position of a shim plate of claim 5, wherein the position adjuster comprises a pressing member at the distal end of the spindle configured to exert a force on the end part of the shim plate,
wherein the pressing member has an oblong shape with a long axis and a short axis at a side abutting the end part of the shim plate.

7. The device for adjusting the position of a shim plate of claim 5, wherein the position adjuster is equipped with a magnetic member at the distal end of the spindle, the magnetic member configured to contact the shim plate.

8. The device for adjusting the position of a shim plate of claim 1, wherein the displacement meter comprises a dial gauge, an eddy current displacement sensor, an optical displacement sensor, a linear proximity sensor, or a magnetoresistive displacement sensor.

9. The device for adjusting the position of a shim plate of claim 1, wherein the attachment part is equipped with a magnetic member having a structure corresponding to the front outer side of the lower die block.

10. A method of adjusting a position of a shim plate for a slot die coater using a device for adjusting the position of a shim plate according to any one of claim 1, comprising:
a step (S1) of attaching a device for adjusting the position of the shim plate to a front outer side of a lower die block where the shim plate is disposed;
a step (S2) of positioning an end part of a displacement meter of the attached device opposite to an end part of the shim plate;
a step (S3) of measuring, using the repositioned displacement meter, an offset value of the shim plate from an outer end part of the lower die block;
a step (S4) of adjusting, using the position adjuster, the position of the shim plate along a longitudinal direction of the shim plate according to the measured offset value; and
a step (S5) of assembling a slot die coater by disposing and fixing an upper die block on the repositioned shim plate.

11. The method of claim 10, wherein the repositioned shim plate is **characterized in that**,
the end part of the shim plate is aligned so that it is on the same line with the outer end part of the lower die block, or
the end part of the shim plate is adjusted to be positioned on an inner side of the lower die block.

12. The method of adjusting the position of a shim plate of claim 11, further comprising:
a step (S0) of disposing the shim plate so that the end part of the shim plate protrudes outwardly of the lower slot die prior to the step (S1) of attaching the device for adjusting the position of the shim plate, when the end part of the shim plate is aligned to be on the same line with the outer end part of the lower die block.

13. The method of adjusting the position of a shim plate of claim 10, wherein the step (S2) of positioning the end part of the displacement meter of the device for adjusting the position of the shim plate so that it is opposite to the end part of the shim plate comprises:
a step (S2-1) of moving the displacement meter along at least one a width direction or a height direction of the lower die block, such that the end part of the shim plate is opposite the end part of the displacement meter; and
a step (S2-2) of fixing the position of the moved displacement meter.

14. The method of adjusting the position of a shim plate of claim 10, wherein the step (S4) of adjusting the position of the shim plate comprises:
contacting an end part of the position adjuster with an end part of the shim plate, and
applying a force to the end part of the shim plate with the position adjuster along a longitudinal direction of the shim plate.

15. The method of adjusting the position of a shim plate of claim 14, wherein the step (S4) of adjusting the position of the shim plate brings the end part of the position adjuster into contact with the end part of the shim plate so that a boundary between the shim plate and the lower die block is located at the center of the end part of the position adjuster, when aligning the end part of the shim plate so that it is on the same line as the outer end part of the lower die block.

16. The method of adjusting the position of a shim plate of claim 10, further comprising contacting a magnetic member at an end part of the position adjuster with the end part of the shim plate.

17. The method of adjusting the position of a shim plate of claim 10, wherein the shim plate comprises a metallic material comprising at least one of iron, cobalt, or nickel.
